# NEUE EUROPÄISCHE PATENTSCHRIFT

(11) **EP 2 241 862 B2**
(45) Veröffentlichungstag und Bekanntmachung des Hinweises auf die Entscheidung über den Einspruch: **05.02.2020**
(45) Hinweis auf die Patenterteilung: 10.05.2017
(21) Anmeldenummer: 10002637.6
(22) Anmeldetag: 12.03.2010
(51) Int. Cl.: G01D 7/02, B65B 65/00

(54) **Verpackungsmaschine mit Anzeigevorrichtung**
Packaging machine and display device for same
Machine d'emballage et dispositif d'affichage pour une machine d'emballage

(30) Priorität: 16.04.2009 DE 102009017638
(43) Veröffentlichungstag der Anmeldung: 20.10.2010
(73) Patentinhaber: MULTIVAC Sepp Haggenmüller SE & Co. KG, 87787 Wolfertschwenden (DE)
(72) Erfinder: Buchberger, Peter, 87437 Kempten (DE); Fleschutz, Markus, 87439 Kempten (DE)
(74) Vertreter: Grünecker Patent- und Rechtsanwälte PartG mbB

(56) Entgegenhaltungen:
- EP-A1- 0 269 737
- EP-A1- 0 458 982
- EP-A1- 1 741 341
- EP-A1- 1 988 369
- EP-A2- 0 959 397
- EP-A2- 1 433 708
- WO-A1-91/09355
- WO-A1-2004/065220
- DE-A1- 10 308 816
- DE-A1- 10 308 816
- DE-A1-102007 021 397
- DE-A1-102008 033 549
- US-A- 4 853 867
- US-A- 5 566 526
- US-B1- 7 069 185
- Brenneis: "Elektronische Kurvenscheiben verpacken schneller", Neue Verpackung, April 2008 (2008-04), XP055462716, Retrieved from the Internet: URL:http://www.neue-verpackung.de/wp-conte nt/uploads/migrated/docs/1579_9430.pdf

## Beschreibung

Die vorliegende Erfindung bezieht sich auf eine Verpackungsmaschine mit einer Anzeigevorrichtung .

In der Praxis sind verschiedene Typen von Verpackungsmaschinen bekannt. Zu den wichtigsten Typen zählen Tiefziehmaschinen, Kammermaschinen, Schalenverschließmaschinen bzw. Schalenversiegelungsmaschinen (in Fachkreisen auch bekannt als "Traysealer") sowie Schlauchbeutelverschließmaschinen. Solche Verpackungsmaschinen sind beispielsweise in der DE 10 2007 021 397 A1 oder der DE 198 28 381 A1 beschrieben.

Bei diesen Verpackungsmaschinen laufen parallel und/oder nacheinander eine Vielzahl von Prozessen ab, bis schließlich das verpackte Produkt zur Verfügung steht. Diese Prozesse bestehen beispielsweise darin, den das Produkt aufnehmenden Verpackungsteil vereinzelt anzuliefern oder sogar (beispielsweise durch ein Tiefziehen einer Folie) herzustellen, die Verpackungsteile mit einem Produkt oder Einfüllgut zu befüllen, einen Deckel oder eine Siegelfolie aufzubringen und mit dem Behälter zu verbinden, die Verpackungen zu etikettieren und/oder die Verpackungen aus einer noch zusammenhängenden Folienbahn zu vereinzeln. Darüber hinaus müssen die Verpackungen zwischen den einzelnen Arbeitsstationen transportiert werden. Für all diese unterschiedlichen Prozesse stehen in der Verpackungsmaschine Aktoren zur Verfügung, die bestimmte Aktionen oder Prozesse (beispielsweise ein Versiegeln oder Etikettieren) oder Bewegungen ausführen.

Die Steuerung einer Verpackungsmaschine ist äußerst komplex, weil alle einzelnen Prozesse aufeinander abgestimmt werden müssen. Insbesondere muss verhindert werden, dass verschiedene Aktoren und/oder Verpackungen miteinander kollidieren, bei bestimmten Prozessen muss sichergestellt sein, dass zunächst ein anderer Prozess beendet ist, und zudem müssen die Materialeigenschaften der Verpackung sowie die Eigenschaften des zu verpackenden Produkts berücksichtigt werden. Jeder Eingriff in den Ablauf der Prozesse in der Verpackungsmaschine ist wegen der Vielzahl der zu beachtenden Parameter und gegenseitigen Abhängigkeiten der verschiedenen Prozesse schwierig und verlangt daher ein hohes Maß an Kenntnis vom Bediener beziehungsweise Einsteller der Maschine. Andererseits ist ein Eingriff in die Steuerung in bestimmten Situationen unumgänglich, beispielsweise wenn pro Zeiteinheit mehr oder weniger zu verpackende Produkte angeliefert werden und die Verarbeitungsgeschwindigkeit der Verpackungsmaschine daraufhin angepasst werden muss.

In der nachveröffentlichten DE 10 2008 030 510 wird ausführlich eine Schalenversiegelungsmaschine ("Traysealer") als Beispiel einer Verpackungsmaschine beschrieben. Dabei werden die vorgefertigten und mit einem Produkt befüllten Schalen auf einem Zuführband angeliefert. Immer wenn eine befüllte Schale das Ende des Zuführbandes erreicht hat, wird sie von dort an ein zweites Zuführband übergeben, das sich in diesem Moment synchron mit dem ersten Zuführband mitbewegt. Auf diese Weise werden eine Gruppe von n befüllten Schalen äquidistant auf dem zweiten Zuführband angeordnet. Von dort wird die Gruppe von n Schalen mittels eines Greifersystems erfasst und auf einen Hubtisch innerhalb der Siegelstation transportiert. Sobald sich der Greifer öffnet und die Schalen freigibt, fährt der Hubtisch nach oben, um die Schalen in Anlage an eine Siegelfolie zu bringen. Nach dem Versiegeln der Siegelfolie mit der Schale, beispielsweise unter Einwirkung von Wärme und Druck oder Ultraschall, bewegt der Hubtisch die n Schalen wieder nach unten bis auf die Höhe des Zuführbandes. Das Greifersystem erfasst in Folge die n versiegelten Schalen gemeinsam mit einer Gruppe von n neu zugeführten Schalen und bewegt sich mit sämtlichen 2n Schalen in Transportrichtung des Zuführbandes. Beim Öffnen des Greifers werden die n versiegelten Schalen auf einem Abführband abgesetzt, um von dort abtransportiert zu werden. Die n neu herangeführten Schalen werden gleichzeitig auf dem Hubtisch abgesetzt, um anschließend angehoben und versiegelt zu werden.

In dem Artikel "Elektronische Kurvenscheiben verpacken schneller", neue verpackung 4.2008, Seiten 179 bis 181, wird ein vereinfachtes Steuerverfahren für Verpackungsmaschinen vorgeschlagen. Dieser Vorschlag beruht auf der Erkenntnis, dass sich die Prozesse in der Verpackungsmaschine zyklisch wiederholen, und geht dahin, die Steuerung der Prozesse mittels einer sogenannten "elektronischen Kurvenscheibe" vorzunehmen. Bei solch einer elektronischen Kurvenscheibe handelt es sich um das elektronische Gegenstück von einer für sich zyklisch wiederholende Prozesse verwendeten mechanischen Kurvenscheibe. Die Kurvenscheibe gibt eine Taktzeit oder Zykluszeit vor, nach der sich die Prozesse zyklisch wiederholen (in Analogie zur Mechanik auch bezeichnet als "Königswelle" oder "Master-Achse"). Ein "Prozess" ist dabei die mittels eines oder mehrerer Aktoren tatsächlich ausgeführte Funktion, beispielsweise ein Transport, ein Siegeln, ein Schneiden etc. Für jeden Aktor ist in der elektronischen Kurvenscheibe ein Steuerprofil vorgesehen, das den Zustand des betreffenden Aktors repräsentiert, einen Befehl weiterleitet oder sogar direkt die am Aktor anliegende Steuerspannung angibt. In dem Artikel "Elektronische Kurvenscheiben verpacken schneller" wird angedeutet, dass die Zykluszeit gedehnt oder gestaucht werden kann, um den Ablauf der Prozesse zu verändern. Dies löst jedoch nicht die vorstehend beschriebene Problematik, dass die verschiedenen Prozesse auf komplexe Weise miteinander zusammenhängen, so dass die isolierte Änderung eines einzelnen Steuerprofils beim Verkürzen oder Verlängern der Taktzeit den gesamten Ablauf der Verpackungsmaschine erschweren oder sogar vollständig zum Erliegen bringen könnte.

Die DE 103 08 816 A1 beschreibt eine Möglichkeit zur grafischen Visualisierung von aufgabenorientierten Schritten bei industriellen Steuerungsverfahren. Eine ähnliche Visualisierung wird beschrieben in der US 7,069,185, in der US 4,853,867 oder in der EP 0 458 982 A1. Keines dieser Dokumente nimmt jedoch Bezug auf die Verpackungsindustrie und die dort herrschenden Anforderungen.

Verpackungsmaschinen als solche gehen beispielsweise aus der US 5,566,526 A oder aus der bereits einleitend genannten DE 10 2007 021 397 A1 hervor.

Aufgabe der vorliegenden Erfindung ist es, die Handhabung einer Verpackungsmaschine für einen Bediener zu verbessern.

Diese Aufgabe wird gelöst durch eine Verpackungsmaschine mit den Merkmalen des Anspruchs 1. Eine vorteilhafte Weiterbildung der Erfindung ist in Anspruch 2 angegeben.

Die Erfindung bezieht sich auf eine Verpackungsmaschine. Deren Anzeigevorrichtung ist im Hinblick auf eine möglichst einfache und intuitive Handhabung einer mit einem Steuerungsverfahren gesteuerten Verpackungsmaschine optimiert. Zu diesem Zweck sieht die erfindungsgemäße Anzeigevorrichtung in einer Zeitstrahl-Grafik eine gleichzeitige Darstellung von wenigstens zwei in der Verpackungsmaschine parallel nacheinander und/oder zeitlich überlappend ablaufenden Prozessen vor. Für jeden dieser Prozesse, bei denen es sich um tatsächlich stattfindende Bewegungen oder Vorgänge wie das Versiegeln, Etikettieren oder Stanzen handelt, ist in der Zeitstrahl-Grafik eine Zeile vorgesehen,
was die Übersichtlichkeit erheblich verbessert. Die Abmessungen von den Prozessen zugeordneten Prozess-Symbolen sind in der Zeitstrahl-Grafik proportional zu der zeitlichen Dauer der jeweiligen Prozesse. Auch das Überlappen beziehungsweise die Anordnung der Prozess-Symbole entspricht vorzugsweise der tatsächlichen zeitlichen Abfolge der Prozesse. Auf diese Weise lässt sich für den Bediener schnell erkennen, auf welche Weise bestimmte Prozesse gleichzeitig oder nacheinander stattfinden. Bei den Prozess-Symbolen kann es sich beispielsweise um Balken handeln, deren Länge proportional ist zur zeitlichen Dauer des jeweiligen Prozesses.

Vorzugsweise ist die Abmessung eines einem Prozess zugeordneten Prozess-Symbols proportional zu der zeitlichen Dauer eines bestimmten Abschnitts des Steuerprofils eines dem jeweiligen Prozess zugeordneten Aktors in einer elektronischen Kurvenscheibe. Denkbar wäre es also, dass in der Anzeigevorrichtung nur derjenige Abschnitt des Steuerprofils repräsentiert wird, zu dem der betreffende Aktor eine bestimmte Bewegung oder Funktion ausführt. Wenn sich dieser Zeitabschnitt des Steuerprofils bei einer Veränderung der Taktzeit verlängert oder verkürzt, auch relativ zu den dargestellten Abschnitten anderer Steuerprofile, würde dies mittels der Anzeigevorrichtung unmittelbar ersichtlich.

Die Anzeigevorrichtung weist auch die Darstellung einer den jeweils aktuellen Zustand der Prozesse der Verpackungsmaschine anzeigenden Null-Linie auf. Diese Null-Linie könnte an derselben Stelle auf der Anzeigevorrichtung bleiben, während im Betrieb der Verpackungsmaschine die Prozess-Symbole unter der Null-Linie hindurchwandern. In einer Variante der Erfindung könnte die Null-Linie auf der Anzeigevorrichtung verschoben werden.

Erfindungsgemäß ist ein Prozess-Symbol durch einen Bediener auswählbar, beispielsweise durch Anklicken des Prozess-Symbols auf der Anzeigevorrichtung, um daraufhin zusätzliche Parameter oder Eigenschaften des Prozesses anzuzeigen. Beispielsweise könnte dann eine untergliederte Folge von einzelnen Prozessschritten angezeigt werden, die vorher im übergeordneten Prozess-Symbol zusammengefasst waren. Des Weiteren könnten Informationen zu dem betreffenden Prozess erscheinen, oder Einstellmöglichkeiten für bestimmte Parameter dieses Prozesses.

Für die Bedienung der Verpackungsmaschine und insbesondere im Hinblick auf eine möglichst hygienische Umgebung ist es zweckmäßig, wenn es sich bei der Anzeigevorrichtung um ein Touchscreen-Display handelt.

Bei der Verpackungsmaschine handelt es sich
um eine Schalenverschließmaschine, eine Tiefziehmaschine oder eine Kammermaschine.

Ein bevorzugtes Verfahren zur Steuerung einer erfindungsgemäßen Verpackungsmaschine sieht vor, dass wenigstens ein Steuerprofil in der zur Steuerung verwendeten, elektronischen Kurvenscheibe in mehrere Abschnitte untergliedert ist, die bestimmten Bewegungen oder Zuständen des zugeordneten Aktors entsprechen. Diese Abschnitte des Steuerprofils könnten dadurch festgelegt sein, dass während eines Abschnitts eine bestimmte Steuerspannung am zugeordneten Aktor anliegt, der Aktor während des Abschnitts eine bestimmte Bewegung ausführt, oder der Aktor während des Abschnitts inaktiv ist. Erfindungsgemäß ist ferner vorgesehen, dass bei diesem Steuerprofil bei einer Veränderung der Taktzeit um einen Faktor F die Dauer eines ersten Abschnitts des Steuerprofils um einen Faktor F1 mit F1 > F und die Dauer eines zweiten Abschnitts des Steuerprofils um einen Faktor F2 mit F2 < F verändert wird. Eine Veränderung der Taktzeit bedeutet ein Erhöhen oder Absenken der Arbeitsgeschwindigkeit beziehungsweise des Durchsatzes der Verpackungsmaschine. Naheliegend wäre es, bei einer Vergrößerung oder Verkleinerung der Taktzeit um einen Faktor F sämtliche Steuerprofile in der elektronischen Kurvenscheibe um denselben Faktor F zu dehnen oder zu stauchen. Die Erfindung beruht jedoch auf der überraschenden Erkenntnis, dass sich der Betriebsablauf der Verpackungsmaschine im Hinblick auf Energieeffizienz, Lebensdauer der Verpackungsmaschine und sichere Handhabung der Produkte deutlich verbessern lässt, wenn eine Veränderung der Taktzeit nicht zu einer einfachen, proportionalen Dehnung oder Stauchung aller Steuerprofile führt, sondern wenn die unterschiedlichen Abschnitte eines Steuerprofils in unterschiedlicher Weise zu einer Veränderung der gesamten Taktzeit beitragen.

Das Steuerungsverfahren bietet den Vorteil, dass ein Aktor mit unterschiedlichen Abschnitten seines Steuerprofils unterschiedliche Beiträge zu einer Verlängerung oder Verkürzung der Taktzeit beisteuern kann - je nach Art und Eigenschaften der Prozessabschnitte, die den jeweiligen Abschnitten des Steuerprofils entsprechen. Dies erlaubt eine Steuerung der Verpackungsmaschine dahingehend, dass Stand- oder Totzeiten einzelner Aktoren reduziert oder sogar vollständig vermieden werden können, und dass Bewegungsmuster langsamer ablaufen können, weil ihnen unter überproportionaler Verkürzung anderer Prozessabschnitte ein größerer Zeitabschnitt innerhalb der Taktzeit eingeräumt wird. Sanftere Bewegungsmuster mit entsprechend herabgesetzten
Geschwindigkeiten und Beschleunigungen tragen dazu bei, Vibrationen und Ermüdungserscheinungen an den beweglichen Teilen der Verpackungsmaschine zu vermeiden, um so die Lebensdauer der Verpackungsmaschine und die Wartungsintervalle deutlich zu verlängern und das Produkt schonender zu bewegen.

Bei einer "elektronischen Kurvenscheibe" im Sinne der Erfindung kann es sich im einfachsten Fall auch um ein einzelnes Steuerprofil für einen einzelnen Aktor handeln, oder auch um eine übergeordnete Koordination der Steuerprofile. Jedem Steuerprofil kann ein Bewegungs-, Geschwindigkeits-, Beschleunigungs- oder Ruckprofil eines Aktors entsprechen.

Bevorzugt ist nicht nur ein Steuerprofil in der erfindungsgemäßen Art und Weise in mehrere Abschnitte untergliedert, sondern mehrere oder sogar alle Steuerprofile der elektronischen Kurvenscheibe sind auf diese Weise in mehrere Abschnitte untergliedert. Dies bietet den Vorteil, dass mehrere oder sogar alle Aktoren in der Verpackungsmaschine auf die soeben beschriebene Weise optimiert werden können.

Denkbar wäre es, dass für bestimmte Abschnitte eines Steuerprofils in der Steuerung eine nicht unter-beziehungsweise überschreitbare Minimal- beziehungsweise Maximaldauer festgelegt ist. Diese Minimal- beziehungsweise Maximaldauer kann sich aus den Eigenschaften und Anforderungen des zugeordneten Aktors ergeben. Beispielsweise darf die Beschleunigungsphase eines Förderbandes oder eines Hubtisches nicht zu kurz sein, weil das Produkt bei den dann auftretenden, hohen Beschleunigungen aus der noch offenen Verpackung herausschwappt (bei flüssigen Produkten) oder herausgeschleudert wird (bei leichten Produkten). Für das Versiegeln der Verpackung kann eine Minimaldauer festgelegt sein, um ein sicheres Aufschmelzen der Siegelfolie zu gewährleisten. Für das Versiegeln kann außerdem eine Maximaldauer festgelegt sein, um den Wärmeeintrag in das Produkt zu begrenzen.

Unter Umständen ist es sinnvoll, dass wenigstens ein Abschnitt eines Steuerprofils bei einer Veränderung der Taktzeit eine unveränderte Dauer beibehält. Zu einer Verlängerung oder Verkürzung der Taktzeit würde dieser Abschnitt des Steuerprofils nichts beitragen. Bei einer Verlängerung der Taktzeit können die übrigen Abschnitte des Steuerprofils folglich überproportional verlängert werden, so dass die damit verbundenen Bewegungen überproportional sanft oder langsam ablaufen können.

Zweckmäßig kann es auch sein, wenn für bestimmte Überlappzeiten von wenigstens zwei Steuerprofilen in der Steuerung eine nicht unter- beziehungsweise überschreitbare Minimal- beziehungsweise Maximaldauer festgelegt ist. Beispielsweise sollten das erste und das zweite Zuführband für eine bestimmte Zeitdauer mit der gleichen Geschwindigkeit laufen, um einen Behälter vom ersten auf das zweite Zuführband übergeben zu können. Außerdem sollte der Hubtisch die Verpackungen während einer vorgegebenen Zeit an die Siegelfolie andrücken. Durch Vorgabe der Minimal- beziehungsweise Maximaldauer für die entsprechenden Überlappzeiten in der Steuerung wird sichergestellt, dass die jeweiligen Funktionen und Arbeitsschritte zuverlässig ausgeführt werden.

In einem Spezialfall wäre es denkbar, dass wenigstens eine Überlappzeit von zwei Steuerprofilen bei einer Veränderung der Taktzeit eine unveränderte Dauer beibehält. Dies kann die Steuerung vereinfachen, da für die feste Überlappzeit bei einer Veränderung der Taktzeit keine neuen Werte berechnet werden müssen. Ein Beispiel für solch eine Überlappzeit ist die Überlappzeit zwischen den Bewegungen des Greifers und des Hubwerks. Unter bestimmten Bedingungen ist es sinnvoll, dass diese Überlappzeit unverändert bleibt, damit sich die Greifer weit genug nach außen bewegen können, bevor das Hubwerk angehoben und geschlossen wird, um eine Kollision zwischen dem Hubwerk und dem Greifer zu vermeiden.

Bevorzugt ist das Verhältnis F1/F und/oder das Verhältnis F2/F für mindestens einen Aktor einstellbar. Entweder ein Bediener oder die Maschine selbst können auf diese Weise einstellen, welchen Beitrag bestimmte Abschnitte eines Steuerprofils bei einer Verlängerung oder Verkürzung der Taktzeit beitragen. Mit anderen Worten kann die Gewichtung des Beitrags verschiedener Abschnitte eines Steuerprofils bei einer Veränderung der Taktzeit verändert werden.

Für die Bedienung der Maschine wäre es besonders komfortabel, wenn der Bediener die Gewichtung, d.h. das Verhältnis F1/F, nicht für jeden einzelnen Abschnitt jedes Steuerprofils einzeln eingeben muss. Möglich wäre es beispielsweise, dass der Bediener zentral eine Einstellung für ein bestimmtes Produkt und/oder für bestimmte Verpackungsmaterialien vornimmt, und dass die Steuerung daraufhin die optimalen Gewichtungen für die einzelnen Steuerprofile bestimmt. Beispielsweise könnte der Bediener einen Wert für die Beschleunigungsempfindlichkeit des Produkts eingeben, insbesondere einen Wert zwischen 0% (für schwere, feste Produkte) und 100% (für leichte oder dünnflüssige Produkte). Je höher bei flüssigen Produkten die Viskosität wäre, desto niedriger wäre der für die Beschleunigungsempfindlichkeit einzustellende Wert.

Bevorzugt ist in der Steuerung ein Verhältnis einstellbar, mit dem sich ein Abschnitt auf einem ersten Steuerprofil relativ zu einem Abschnitt auf einem zweiten Steuerprofil bei einer Veränderung der Taktzeit verändert. Durch diese Maßnahme kann das Steuerungsverfahren noch besser an die zu verpackenden Produkte angepasst werden.

Die Veränderung der Taktzeit könnte automatisch durch die Steuerung der Verpackungsmaschine erfolgen, beispielsweise wenn Sensoren in der Verpackungsmaschine sich verändernde Randbedingungen registrieren. Zum Beispiel könnte die Taktzeit verlängert werden, wenn pro Zeiteinheit weniger Produkte an die Verpackungsmaschine angeliefert werden, oder wenn Sensoren einen Bedarf für eine längere Versiegelungsdauer erkennen. Denkbar wäre es auch, dass die Taktzeit manuell durch einen Bediener veränderbar ist.

Im Folgenden wird ein vorteilhaftes Ausführungsbeispiel der Erfindung anhand einer Zeichnung näher dargestellt. Im Einzelnen zeigen:
- Figur 1: eine perspektivische Ansicht einer Verpackungsmaschine in Form einer Schalenverschließmaschine ("Traysealer"),
- Figur 2: eine schematische Darstellung des Ablaufs bestimmter Prozesse innerhalb der Verpackungsmaschine,
- Figur 3: einen Ausschnitt aus der elektronischen Kurvenscheibe der erfindungsgemäßen Verpackungsmaschine bezüglich der in Figur 2 dargestellten Prozesse,
- Figur 4: den in Figur 3 dargestellten Ausschnitt der elektronischen Kurvenscheibe nach einer Verlängerung der Taktzeit unter herkömmlicher, proportionaler Streckung aller Steuerprofile,
- Figur 5: den in Figur 3 dargestellten Ausschnitt der elektronischen Kurvenscheibe nach einer Verlängerung der Taktzeit unter Anwendung des erfindungsgemäßen Verfahrens, und
- Figur 6: eine Darstellung der Anzeigevorrichtung der Verpackungsmaschine.

Gleiche Komponenten sind in den Zeichnungen durchgängig mit gleichen Bezugszeichen versehen.

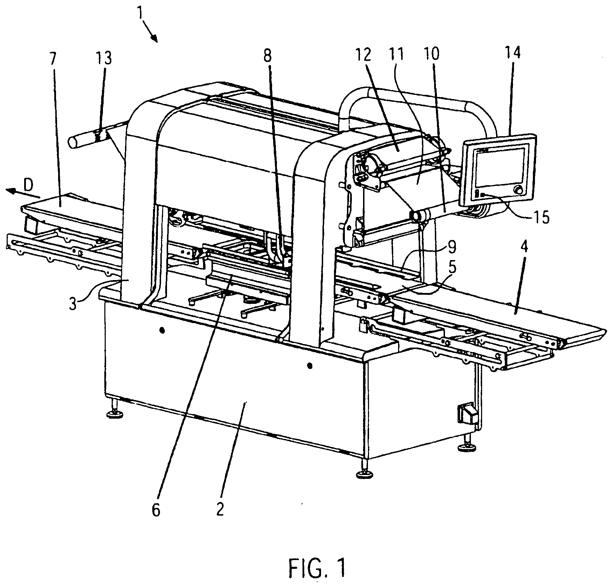

Figur 1 zeigt in perspektivischer Ansicht eine erfindungsgemäße Verpackungsmaschine 1 in Form einer Schalenversiegelungsmaschine ("Traysealer").

Die Verpackungsmaschine 1 weist ein Maschinengestell 2 auf, über dem ein Aufbau 3 montiert ist. Ein erstes Zuführband 4 zum Heranführen von gefüllten, schalenförmigen Behältern (nicht dargestellt) fluchtet in horizontaler Richtung mit einem zweiten Zuführband 5. Die beiden Zuführbänder 4, 5 sind durch eine schmalen Spalt voneinander getrennt.

In einer abgesenkten Stellung fluchtet die Oberseite eines Hubtisches 6 mit der Oberfläche der beiden Zuführbänder 4, 5. Jenseits des Hubtisches 6 fluchtet ein Abführband 7 mit der Oberfläche des abgesenkten Hubtisches 6.

Die Verpackungsmaschine 1 verfügt über ein Greifersystem 8, mit dem gleichzeitig 2n Schalen ergriffen werden können. Zu diesem Zweck weist das Greifersystem 8 zwei horizontale Greifer 9 auf, die jeweils rechts beziehungsweise links des zweiten Zuführbandes 5 liegen und sich synchronisiert in horizontaler Richtung senkrecht zur Durchlaufrichtung D der Verpackungsmaschine 1 bewegen können, um Schalen zwischen sich zu ergreifen oder loszulassen. Das gesamte Greifersystem 8 einschließlich der Greifer 9 kann sich in horizontaler Richtung parallel zur Durchlaufrichtung D bewegen.

Eine Folienzuführrolle 10 dient zur Speicherung und zur Abgabe einer Siegelfolie 11. Die Siegelfolie 11 läuft über eine Folienspannvorrichtung 12 zu einer im Aufbau 3 oberhalb des Hubtisches 6 angeordneten Siegelvorrichtung, um dort mit den Behältern versiegelt zu werden. Der Rest der Siegelfolie 11 wird auf einem Folienrestaufwickler 13 aufgewickelt.

Eine schwenkbar an dem Aufbau 3 der Verpackungsmaschine 1 montierte Anzeigevorrichtung 14 dient dazu, dem Bediener den aktuellen Zustand der Verpackungsmaschine 1 anzuzeigen sowie deren Bedienung zu ermöglichen. Zu diesem Zweck sind an der Anzeigevorrichtung 14 Bedienelemente 15 vorgesehen. Denkbar wäre es auch, dass es sich bei der Anzeigevorrichtung 14 um ein Touchscreen-Display handelt, so dass die Bedienung mittels der direkten Eingabe auf dem Bildschirm erfolgt.

Im Betrieb der Verpackungsmaschine 1 werden schalenförmige Behälter während oder nach deren Befüllung auf dem ersten Zuführband 4 transportiert. Immer wenn ein Sensor kurz vor dem Ende des ersten Zuführbandes 4 einen Behälter erfasst, wird das zweite Zuführband 5 synchronisiert mit dem ersten Zuführband 4 so in Bewegung gesetzt, dass der Behälter vom ersten Zuführband 4 in das zweite Zuführband 5 übergeben wird. Diese Übergabe erfolgt insbesondere so, dass die Behälter äquidistant auf dem zweiten Zuführband 5 angeordnet werden, indem das zweite Zuführband 5 nach der Aufnahme eines Behälters wieder angehalten wird. Sobald eine vorgegebene Zahl von n Behältern (beispielsweise drei Behältern) auf dem zweiten Zuführband 5 angeordnet sind, werden die mit entsprechenden Aufnahmeöffnungen versehenen Greifer 9 des Greifersystems 8 an die Behälter herangefahren. Sobald die Behälter zwischen den beiden Greifern 9 festgeklemmt sind, bewegt sich das gesamte Greifersystem 8 in Durchlaufrichtung D der Verpackungsmaschine 1, bis die Behälter auf beziehungsweise über dem Hubtisch 6 positioniert sind. Nachdem die Greifer 9 geöffnet wurden und die Behälter dadurch freigegeben wurden, verfährt der Hubtisch 6 nach oben. Auf diese Weise werden die gefüllten Behälter zu einer Siegelstation gebracht, an der die Behälter mittels der Siegelfolie 11 versiegelt werden. Nach dem Versiegeln verfährt der Hubtisch 6 wieder nach unten bis auf die Höhe der Zuführbänder 4, 5. Während des Versiegelns verfährt das Greifersystem 8 entgegen der Durchlaufrichtung D in die Ausgangsposition. Wenn die Greifer 9 wieder aufeinander zubewegt werden, erfassen sie gleichzeitig die n versiegelten Behälter auf dem Hubtisch sowie n neue, auf dem zweiten Zuführband 5 bereitgestellte Behälter. Bewegt sich das Greifersystem 8 nun wieder in Durchlaufrichtung D werden die n versiegelten Behälter auf das Abführband 7 bewegt und beim Öffnen der Greifer 9 dort abgesetzt. Gleichzeitig werden die n neuen Behälter auf dem Hubtisch 6 abgesetzt, um anschließend versiegelt zu werden. Die n bereits versiegelten Behälter können mittels des Abführbandes 7 aus der Verpackungsmaschine 1 abtransportiert werden. Gegebenenfalls erfolgt noch ein Etikettieren der versiegelten Behälter.

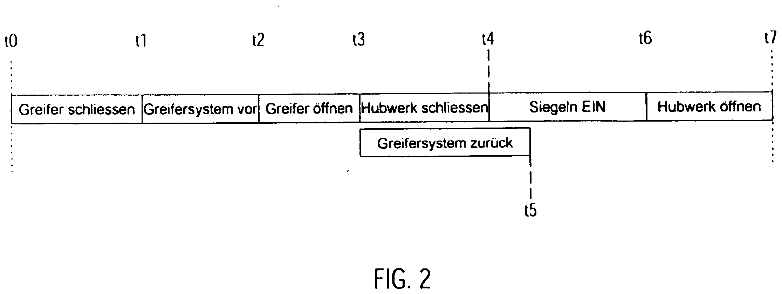

Der Bewegungsablauf des Hubtisches 6 und des Greifersystems 8 ist noch einmal in schematischer Form in Figur 2 dargestellt. Zum Zeitpunkt t0 beginnt sich das Greifersystem zu schließen, in dem die Greifer 9 aufeinander zubewegt werden. Zum Zeitpunkt t1 haben sich die Greifer 9 um die Behälter geschlossen, und das gesamte Greifersystem 8 wird nun in Durchlaufrichtung D der Verpackungsmaschine 1 bewegt. Zum Zeitpunkt t2 steht das Greifersystem 8 wieder still und es öffnen sich die Greifer 9. Sobald sich die Greifer 9 aus dem Verfahrweg des Hubtisches 6 entfernt haben, kann das Hubwerk beim Zeitpunkt t3 geschlossen werden, d.h. der Hubtisch 6 angehoben werden. Gleichzeitig wird das Greifersystem 8 entgegen der Durchlaufrichtung D zurückbewegt, um beim Zeitpunkt t5 wieder seine Ausgangsposition erreicht zu haben. In der angehobenen Position des Hubtisches 6 erfolgt ab dem Zeitpunkt t4 das Versiegeln der Behälter, das beim Zeitpunkt t6 abgeschlossen ist. Beim Zeitpunkt t6 kann das Hubwerk wieder öffnen, indem der Hubtisch 6 nach unten verfahren wird. Zum Zeitpunkt t7 ist ein Arbeitszyklus der Verpackungsmaschine 1 abgeschlossen, so dass hier (wie beim Zeitpunkt t0) ein neuer Arbeitszyklus beginnen kann. Die Zeit T = t7 - t0 stellt somit die Taktzeit oder Zykluszeit der Verpackungsmaschine 1 dar.

Zum Ausführen der verschiedenen Bewegungen und Funktionen verfügt die Verpackungsmaschine 1 über eine Vielzahl von Aktoren. Beispielsweise dient je ein Aktor zum Betreiben eines der Zu- oder Abführbänder, ein weiterer Aktor zum Heben und Absenken des Hubtisches 6, ein Aktor zum horizontalen Verfahren des gesamten Greifersystems 8, ein Aktor zum Öffnen und Schließen der Greifer 9, ein Aktor zum Versiegeln und ein Aktor zum Abrollen oder Aufwickeln der Siegelfolie 11. Selbstverständlich können weitere Aktoren vorgesehen sein, oder es können mehrere Aktoren einem Prozess zugeordnet sein.

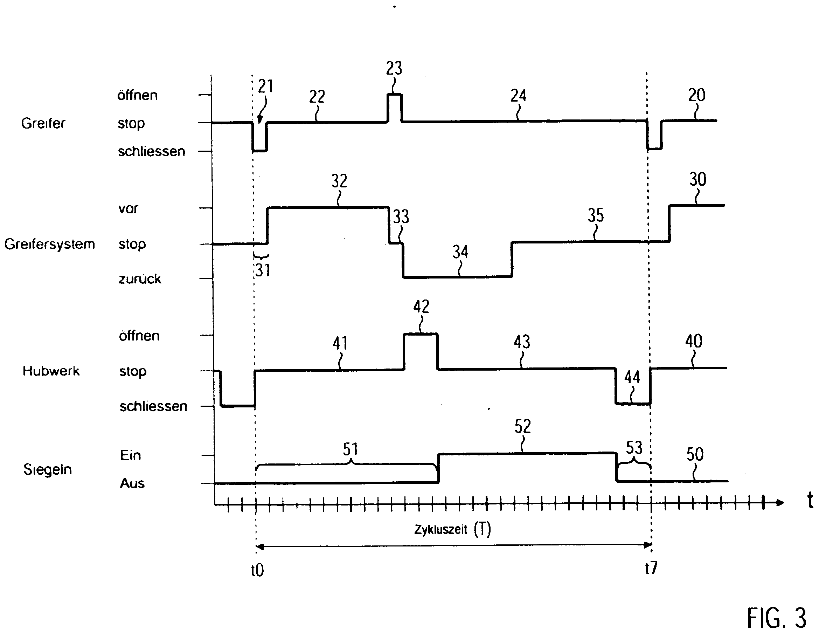

Zu ihrer Steuerung weist die erfindungsgemäße Verpackungsmaschine 1 eine elektronische Kurvenscheibe auf, in der jedem Aktor der Verpackungsmaschine 1 ein eigenes Steuerprofil zugeordnet ist. Einen Ausschnitt aus dieser elektronischen Kurvenscheibe für die Aktoren der Greifer 9, des gesamten Greifersystems 8, des Hubtisches 6 und der Siegelstation zeigt Figur 3.

Ein erstes Steuerprofil 20 ist den Bewegungen der Greifer 9 zugeordnet. Dieses erste Steuerprofil 20 weist vier Abschnitte 21 bis 24 auf. Der erste Abschnitt 21 kennzeichnet die Schließbewegung der Greifer 9. Während des zweiten Abschnitts 22 werden die Greifer geschlossen gehalten. Im dritten Abschnitt 23 öffnen die Greifer, um diese geöffnete Stellung während des vierten Abschnitts 24 beizubehalten. Anschließend, d.h. beim Erreichen der Taktzeit t7, beginnt das Steuerprofil 20 wieder mit dem ersten Abschnitt 21.

Das zweite Steuerprofil 30 ist der Horizontalbewegung des gesamten Greifersystems 8 zugeordnet. Während des Schließens der Greifer 9 bleibt das Greifersystem 8 insgesamt während eines ersten Abschnitts 31 des Steuerprofils 30 in Ruhe. Während des Abschnitts 32 verfährt das Greifersystem in Durchlaufrichtung D. Während des dritten Abschnitts 33 bleibt das Greifersystem 8 in Ruhe. Anschließend bewegt es sich während des vierten Abschnitts 32 wieder zurück in die Ausgangsposition, um dort während des Abschnitts 35 zu verharren.

Das dritte Steuerprofil 40 ist der Bewegung des Hubtisches 6 beziehungsweise des Hubwerks zugeordnet. Während eines ersten Abschnitts 41 dieses Steuerprofils 40 bleibt der Hubtisch 6 in seiner abgesenkten Position in Ruhe. Während des zweiten Abschnitts 42 wird der Hubtisch 6 nach oben verfahren, um dort während eines dritten Abschnitts 43 zu verharren. Anschließend wird der Hubtisch 6 im vierten Abschnitt 44 wieder abgesenkt.

Das vierte Steuerprofil 50 ist dem Siegelwerkzeug zugeordnet. Im ersten Abschnitt 51 und im dritten Abschnitt 53 ist das Siegelwerkzeug inaktiv. Nurwährend eines zweiten Abschnitts 52 ist es zum Versiegeln der Behälter aktiviert.

Die Zykluszeit T von t0 bis t7 beträgt hier 29 Zeiteinheiten, beispielsweise 29 Zehntel-Sekunden.

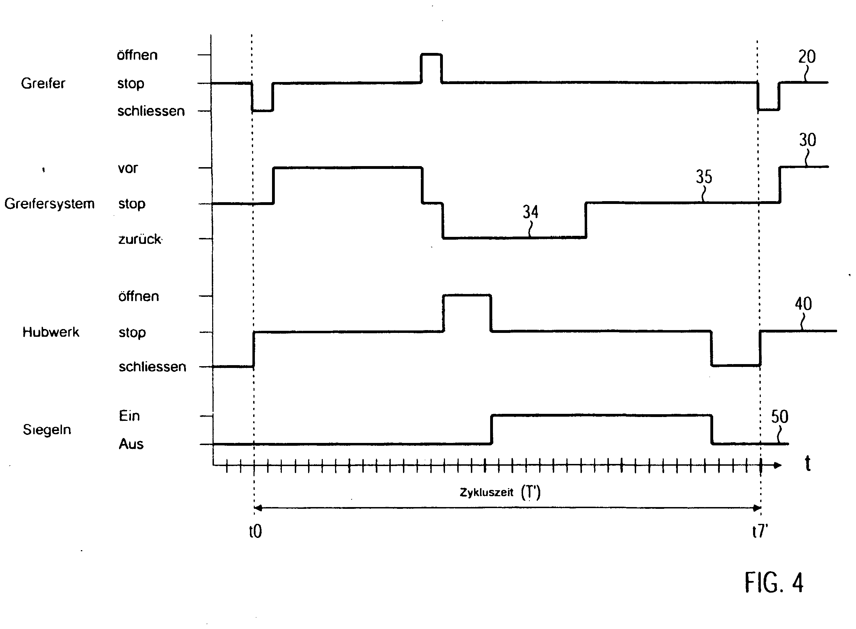

Figur 4 zeigt den gleichen Ausschnitt der elektronischen Kurvenscheibe, der sich herkömmlicherweise beim Verlängern der Zykluszeit T ergab. Im dargestellten Ausführungsbeispiel wurde die Takt- oder Zykluszeit T von 29 auf 37 Zeiteinheiten verlängert, d.h. beispielsweise von 2,9 auf 3,7 Sekunden. Diese Verlängerung der Zykluszeit T kann entweder durch einen Bediener vorgegeben worden sein, oder automatisch von der Steuerung der Verpackungsmaschine 1 vollzogen worden sein. Beispielsweise kann eine verlängerte Zykluszeit T erforderlich sein, um eine längere Zeit zum Versiegeln zur Verfügung zu stellen, oder um den Durchsatz der Verpackungsmaschine 1 pro Zeiteinheit zu verringern, wenn weniger Verpackungen angeliefert werden.

In der herkömmlichen Steuerung von Verpackungsmaschinen werden, wie in Figur 4 dargestellt, sämtliche Steuerprofile 20, 30, 40, 50 proportional zueinander gestreckt (oder bei einer Verkürzung der Zykluszeit T entsprechend proportional gestaucht). Jeder der Abschnitte 21 bis 24, 31 bis 35, 41 bis 44, 51 bis 53 der Steuerprofile 20, 30, 40, 50 ist demnach um denselben Faktor F = 37/29 verlängert worden. Damit ergibt sich derselbe Ablauf der Verpackungsmaschine wie vorher, nur entsprechend verlangsamt.

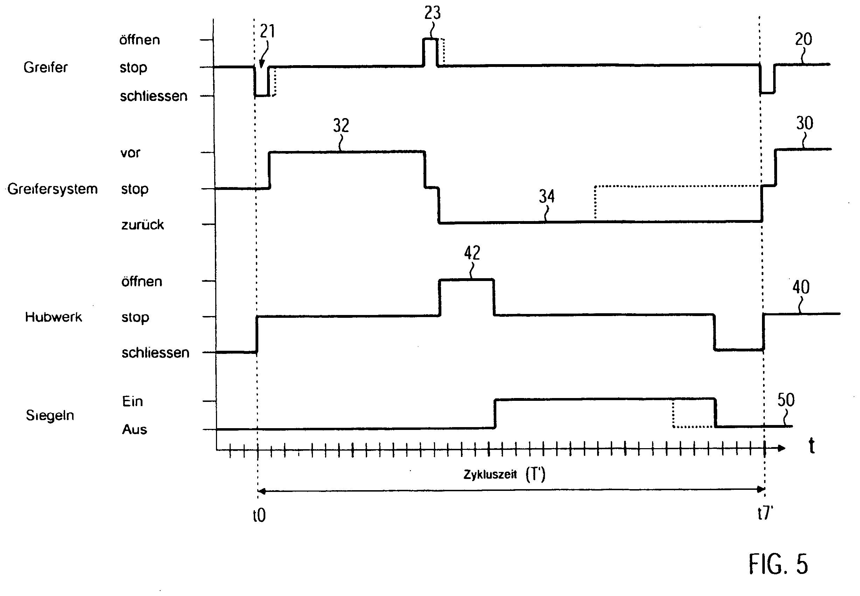

Figur 5 zeigt wiederum den gleichen Ausschnitt aus der elektronischen Kurvenscheibe, abermals bei einer Verlängerung der Zykluszeit T um den Faktor F = 37/29, diesmal jedoch bei Anwendung des Steuerungsverfahrens. Am Beispiel des ersten Steuerprofils 20 für die Bewegung der Greifer 9 ist strichliert der Verlauf dargestellt, der sich mit der herkömmlichen Steuerung gemäß Figur 4 ergibt. Der tatsächliche Verlauf des ersten Steuerprofils 20 mit durchgezogenen Linien zeigt demgegenüber, dass der erste Abschnitt 21 und der dritte Abschnitt 23 nicht verlängert werden, sondern dieselbe Dauer beibehalten wie im Ausgangszustand gemäß Figur 3. Die beiden Abschnitte 21, 23 sind folglich um einen Faktor F2 = 1 < F "gestreckt" worden. Die übrigen beiden Abschnitte 22, 24 sind umgekehrt mit einem Faktor F2 > F und damit überproportional gestreckt worden, um insgesamt die Verlängerung der Zykluszeit T auf dem ersten Steuerprofil 20 zu erreichen.

Die Bewegung der Greifer 9 während der beiden Abschnitte 21, 23 hat, wenn überhaupt, nur einen sehr geringen Einfluss auf die Bewegung des Produktes in der Verpackungsschale. Beim Schließen der Greifer 9 ruhen die Schalen auf dem Zuführband 5 oder auf dem Hubtisch 6. Sie erfahren allenfalls von beiden Seiten einen kleinen Stoß durch die Greifer 9. Beim Öffnen der Greifer 9 ruhen die Schalen ebenfalls auf dem Hubtisch 6 beziehungsweise auf dem Abführband 7. Auch bei einem schnellen Öffnen der Greifer 9 wird kein Stoß auf den Behälter und das darin befindliche Produkt ausgeübt, der das Produkt zu stark relativ zum Behälter beschleunigen könnte. Vor dem Hintergrund dieser Überlegungen kann die Zeitdauer für die beiden Abschnitte 21, 23 beibehalten werden, auch wenn die gesamte Zykluszeit T verlängert wird. Die Verlängerung der Zykluszeit
wird stattdessen überproportional an anderen Abschnitten des Betriebsablaufs der Verpackungsmaschine 1 erreicht.

Das Beibehalten der Geschwindigkeit beim Öffnen und Schließen der Greifer 9 bedeutet, dass die Bewegung des Greifersystems 8 innerhalb eines Zyklus zum selben Zeitpunkt einsetzen kann wie in Figur 3. Der zweite Abschnitt 32 des Steuerprofils 30 des Greifersystems 8 ist nun überproportional verlängert, d.h. mit einem Faktor F2 > F. Dies bedeutet, dass das komplexe Greifersystem 8 überproportional langsam beschleunigt und bewegt werden kann, um dennoch vor dem Öffnen der Greifer 9 wieder in Ruhe zu sein. Diese überproportional langsame Bewegung des Greifersystems 8 schont nicht nur das in der Schale befindliche Produkt, sondern auch die beweglichen Komponenten des Greifersystems 8.

In gleicher Weise kann auch die Hubbewegung des Hubtisches 6 während des Abschnitts 42 überproportional langsam erfolgen, wenn die Greiferbewegung im Zeitabschnitt 23 ihre Ausgangsgeschwindigkeit beibehält. Auch der Aktor und die beweglichen Komponenten des Hubtisches 6 können demnach langsamer und schonender betrieben werden. Gleichzeitig verringert sich dadurch der Energieverbrauch der Verpackungsmaschine 1.

Am Steuerprofil 30 für das Greifersystem 8 hat das Steuerungsverfahren eine weitere Optimierung vorgenommen. Strichliert ist der Verlauf des Steuerprofils 30 dargestellt, der sich mit dem herkömmlichen, einfachen beziehungsweise proportionalen Strecken der Abschnitte 34, 35 des Steuerprofils 30 ergeben hätte - wie dies in Figur 4 dargestellt ist. Im Unterschied dazu sorgt das Steuerungsverfahren für eine Verlängerung des Abschnitts 34 des Steuerprofils 30 bis zum Zeitpunkt t7', d.h. bis zum Ende der verlängerten Zykluszeit T'. Der fünfte Abschnitt 35 des Steuerprofils 30 entfällt dabei, d.h. auf den vierten Abschnitt 34 folgt wieder der erste Abschnitt 31 des nachfolgenden Zyklus. Bei dieser Vorgehensweise wird eine Tot- oder Standzeit des Greifersystems 8 vermieden, denn während des Abschnitts 35 hätte das Greifersystem in seinem Ausgangszustand verharrt. Für den Prozess des Abschnitts 34, d.h. das Zurückfahren des Greifersystems 8 in seine Ausgangsposition, steht nun ein extrem langer Zeitabschnitt zur Verfügung. Mit entsprechend niedrigen Beschleunigungen und langsamen Bewegungen kann das Greifersystem 8 nun in seine Ausgangsposition zurückversetztwerden.

Üblicherweise ist die Zeit für das Siegeln der Siegelfolie auf die Schalen bei gleichartigen Produkten eine gleichbleibende Zeit und strichliert dargestellt, im Gegensatz zur proportionalen Streckung.

Im Fall von zusätzlichem Evakuieren und/oder Begasen der Behälter in der geschlossenen Siegelstation kann es sinnvoll sein, die maximal zur Verfügung stehende Zeit zu nutzen, um noch bessere Restsauerstoffwerte zu erreichen. Der Abschnitt 53 ist vor diesem Hintergrund in Figur 5 mit durchgezogenen Linien im Vergleich zur Ausgangssituation aus Figur 3 um den Faktor F verlängert worden.

In der erfindungsgemäßen Steuerung werden Angaben darüber abgelegt und berücksichtigt, welche Prozessabschnitte ihre Zeitdauer beibehalten können, um andere Prozessabschnitte überproportional verlängern zu können, wenn die Zykluszeit T verlängert wird. Außerdem können Angaben darüber berücksichtigt werden, welche Prozessabschnitte unter- oder überproportional zu einer Verkürzung der Zykluszeit T beitragen können. Darüber hinaus können Minimal- oder Maximalwerte für die Dauer bestimmter Abschnitte der Steuerprofile angelegt sein. Beispielsweise darf die Dauer des Abschnitts 52 zum Versiegeln nicht zu kurz sein, weil ansonsten die Qualität der Versiegelung beeinträchtigt werden könnte. Umgekehrt darf die Zeitdauer zum Versiegeln nicht zu lange sein, um den Wärmeeintrag ins Produkt zu begrenzen.

Bei einigen Prozessen ist die Überlappzeit zwischen zwei Prozessen ein wichtiges Kriterium für einen ruhigen Betriebsablauf der Verpackungsmaschine 1. Beispielsweise müssen das erste Zuführband 4 und das zweite Zuführband 5 für die Dauer der Übergabe synchron betrieben werden, um eine Verpackungsschale sicher vom ersten Zuführband 4 auf das zweite Zuführband 5 übergeben zu können. Die Steuerung kann daraufhin optimiert werden, dass solche Überlappzeiten konstant sind beziehungsweise bestimmte Minimal- oder Maximalwerte nicht überschreiten.

In einer vorteilhaften Variante der Erfindung kann der Bediener auswählen, mit welcher Gewichtung einzelne Abschnitte bestimmter Steuerprofile oder Gruppen von Abschnitten eines oder unterschiedlicher Steuerprofile 20, 30, 40, 50 bei einer Verlängerung oder Verkürzung der Zykluszeit T beitragen sollen. Das Verändern der Gewichtung durch den Bediener kann dazu führen, dass sich auch bei gleichbleibender Zykluszeit T die Verhältnisse zwischen einigen Abschnitten eines oder mehrerer Steuerprofile relativ zueinander verändern.

Beispielsweise kann diese Gewichtung durch den Bediener im Hinblick auf die Materialeigenschaften der Verpackung oder der Siegelfolie oder im Hinblick auf die Eigenschaften des Produkts, insbesondere dessen Beschleunigungsempfindlichkeit, erfolgen. Stellt der Bediener beispielsweise für flüssige Produkte auf einer Skala von 0% bis 100% für die Beschleunigungsempfindlichkeit (wobei 0% die maximale Beschleunigungsempfindlichkeit oder Produktempfindlichkeit bedeutet) einen niedrigen Wert ein, werden die Steuerprofile 20, 30, 40, 50 im Hinblick auf eine möglichst geringe Beschleunigung der Produkte optimiert. Die Steuerung wird daher versuchen, primär die Abschnitte 32, 34 der Bewegung des Greifersystems 8 auf dem Steuerprofil 30 zu verlängern, sekundär die Abschnitte 42, 44 der Hubbewegung des Hubtisches 6 auf dem Steuerprofil 40. Bei weniger beschleunigungsempfindlichen Produkten würde eine weniger starke Verlängerung der Abschnitte 32, 34 ausreichen. In einer einfachen Variante wäre es denkbar, dass der vom Bediener eingestellte Grad der Beschleunigungsempfindlichkeit direkt umgesetzt wird in ein Verhältnis F1/F2, mit dem bestimmte Abschnitte eines Steuerprofils über- beziehungsweise unterproportional zu einer Verlängerung der Zykluszeit T beitragen.

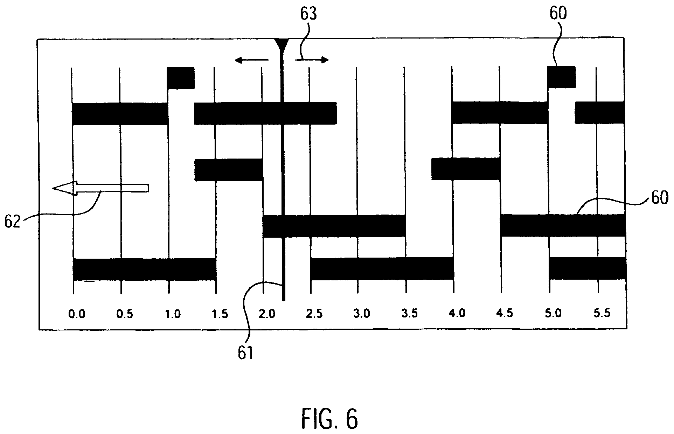

Figur 6 zeigt eine schematische Ansicht des Anzeigefeldes einer erfindungsgemäßen Anzeigevorrichtung 14. Auf dieser Anzeigevorrichtung 14 ist der Betriebsablauf der Verpackungsmaschine 1 in schematischer Ansicht in einer Zeitstrahlgrafik dargestellt. Einer Arbeitsstation oder einem bestimmten Prozess der Verpackungsmaschine 1 ist auf der Anzeigevorrichtung 14 jeweils eine Zeile zugeordnet. Ein Prozesssymbol 60 in Form eines Balkens kennzeichnet einen bestimmten Abschnitt des zugehörigen Steuerprofils 20, 30, 40, 50 der elektronischen Kurvenscheibe. In der dem Hubtisch 6 zugeordneten Zeile kann das Prozesssymbol 60 beispielsweise das Heben oder das Absenken des Hubtisches 6 anzeigen. In den übrigen Bereichen der entsprechenden Zeile ist kein Prozesssymbol 60 angezeigt. In der Zeile für das Greifersystem 8 sind die Zeitabschnitte einer Bewegung des Greifersystems nach vorne oder nach hinten gekennzeichnet.

Mittels der Prozesssymbole 60 kann der Bediener schnell erkennen, welche Prozesse gleichzeitig oder nacheinander ablaufen. Gleichzeitig kann er die Länge eines einzelnen Prozessabschnittes erkennen, da die Horizontalausdehnung jedes Prozesssymbols 60 der von diesem Prozessabschnitt eingenommenen Zeitdauer entspricht. Je länger ein Prozesssymbol 60 also in Horizontalrichtung dargestellt ist, desto länger ist auch der entsprechende Prozessabschnitt, und umgekehrt.

In Figur 6 ist darüber hinaus eine Nulllinie 61 dargestellt. Sie entspricht dem zu einem bestimmten Zeitpunkt eingenommenen, tatsächlichen Zustand der Verpackungsmaschine 1. Alle Prozesse, deren Prozesssymbole 60 von der Nulllinie 61 geschnitten werden, sind demnach zu diesem Zeitpunkt aktiv. Im Betrieb der Verpackungsmaschine 1 wandern die Prozesssymbole 60 gleichmäßig unter der Nulllinie 61 hindurch, wie dies durch den Pfeil 62 angegeben ist. Durch die Pfeile 63 wird angedeutet, dass die Nulllinie 61 nach rechts oder links auf der Anzeigevorrichtung 14 in eine vom Bediener gewünschte Position zur besseren Übersichtlichkeit verschoben werden kann.

Bei der Erfindung kann der Bediener eines der Prozesssymbole 60 auswählen, beispielsweise durch Anklicken. In diesem Fall würde er eine vergrößerte Darstellung der in diesem Prozesssymbol 60 zusammengefassten Prozessabläufe erhalten oder ein Menü zur Einstellung bestimmter Parameter des betreffenden Prozesses.

Ausgehend von dem dargestellten Ausführungsbeispiel kann die erfindungsgemäße Verpackungsmaschine auf vielfache Weise verändert werden. Beispielsweise muss es sich bei den Prozesssymbolen 60 auf der Anzeigevorrichtung 14 nicht um Balken handeln, wie in Figur 6 dargestellt. Stattdessen könnte auch unmittelbar eine Anzeige der Steuerprofile 20, 30, 40, 50 der elektronischen Kurvenscheibe erfolgen. Bei der Verpackungsmaschine 1 muss es sich nicht um einen "Traysealer" handeln. Vielmehr kann das Steuerungsverfahren ebenso gut auf einer Tiefziehmaschine, einer Kammermaschine oder einer Schlauchbeutelmaschine angewendet werden, die dann entsprechend andere Prozesse und die dafür erforderlichen Aktoren aufweisen.

Die Anzeigevorrichtung 14 kann dahingehend ergänzt werden, dass für einen oder mehrere Prozesse mit beispielsweise gestrichelten Linien die Minimal- und/oder Maximaldauern eines einem bestimmten Prozesssymbol 60 zugeordneten Prozesses angezeigt werden. Auf diese Weise kann der Bediener schnell erkennen, ob der betreffende Prozessabschnitt noch weiter verkürzt oder verlängert werden kann. Denkbar wäre es auch, dass für einen bestimmten Prozess eine Stand- oder Totzeit des betreffenden Aktors graphisch dargestellt wird, beispielsweise in roter Farbe. Dies kann dem Bediener der Verpackungsmaschine die Analyse des Betriebsablaufs der Maschine zum Optimieren der Prozessparameter erleichtern.

## Patentansprüche

1. Verpackungsmaschine (1) in Form einer Schalenverschließmaschine, einer Tiefziehmaschine oder einer Kammermaschine, mit einer Anzeigevorrichtung (14), wobei die Anzeigevorrichtung (14) in einer Zeitstrahl-Grafik eine gleichzeitige Darstellung von wenigstens zwei in der Verpackungsmaschine (1) parallel, nacheinander und/oder zeitlich überlappend ablaufenden Prozessen vorsieht, wobei für jeden Prozess in der Zeitstrahl-Grafik eine Zeile vorgesehen ist, wobei die Abmessungen von den Prozessen zugeordneten Prozess-Symbolen (60) proportional sind zu der zeitlichen Dauer der jeweiligen Prozesse und wobei die Anzeigevorrichtung (14) die Darstellung einer den jeweils aktuellen Zustand der Prozesse der Verpackungsmaschine (1) anzeigenden Nulllinie (61) aufweist, und
wobei ein Prozess-Symbol (60) durch einen Bediener auswählbar ist, um zusätzliche Parameter oder Eigenschaften des Prozesses anzuzeigen.

2. Verpackungsmaschine nach Anspruch 1, wobei die Abmessung eines einem Prozess zugeordneten Prozess-Symbols (60) proportional ist zu der zeitlichen Dauer eines bestimmten Abschnitts (21-24, 31-35, 41-44, 51-53) des Steuerprofils (20, 30, 40, 50) eines dem jeweiligen Prozess zugeordneten Aktors in einer elektronischen Kurvenscheibe.

## Claims

1. Packaging machine (1) in the form of a tray sealing machine, a deep-drawing machine or a chamber machine, comprising a display device (14), wherein the display device (14) in a timeline graphic provides for a simultaneous representation of at least two processes that take place in the packaging machine (1) in parallel, one after the other and/or in time-overlapping fashion, wherein a line is provided for each process in the timeline graphic, wherein the dimensions of process symbols (60) assigned to the processes are proportional to the time duration of the respective processes, and wherein the display device (14) shows the representation of a zero line (61) indicating the respectively current state of the processes of the packaging machine (1), and
wherein a process symbol (60) is selectable by an operator to indicate additional parameters or characteristics of the process.

2. Packaging machine according to claim 1, wherein the dimension of a process symbol (60) assigned to a process is proportional to the time duration of a specific section (21-24, 31-35, 41-44, 51-53) of the control profile (20, 30, 40, 50) of an actuator assigned to the respective process in an electronic cam.

## Revendications

1. Machine d'emballage (1) sous la forme d'une machine de fermeture de barquettes, d'une machine de thermoformage par emboutissage ou d'une machine à chambre, comprenant un dispositif de visualisation (14), machine d'emballage,
dans laquelle le dispositif d'affichage (14) prévoit, dans une frise chronologique, une représentation simultanée d'au moins deux processus se déroulant en parallèle, successivement et/ou en se chevauchant mutuellement dans le temps, dans la machine d'emballage (1),
dans laquelle il est prévu, pour chaque processus, une ligne dans la frise chronologique,
dans laquelle les dimensions de symboles de processus (60) associés aux processus, sont proportionnelles à la durée dans le temps des processus respectifs, et
dans laquelle le dispositif de visualisation (14) comprend la représentation d'une ligne nulle (61) indiquant l'état actuel respectif des processus de la machine d'emballage (1), et
dans laquelle un symbole de processus (60) peut être sélectionné par un utilisateur, pour visualiser des paramètres ou propriétés supplémentaires du processus.

2. Machine d'emballage selon la revendication 1, dans laquelle la dimension d'un symbole de processus (60) associé à un processus est proportionnelle à la durée dans le temps d'un secteur déterminé (21-24, 31-35, 41-44, 51-53) du profil de commande (20, 30, 40, 50) d'un actionneur associé au processus respectivement considéré, dans une came électronique.
